(19) Europäisches Patentamt

European Patent Office

Office européen des brevets

(11) **EP 1 516 899 B1**

(12) **EUROPEAN PATENT SPECIFICATION**

(45) Date of publication and mention
of the grant of the patent:
**05.04.2006 Bulletin 2006/14**

(51) Int Cl.:
***C09K 3/18*** (2006.01)

(21) Application number: **04101929.0**

(22) Date of filing: **05.05.2004**

(54) **Environmentally friendly deicer with minimized corrosiveness**

Umweltfreundlicher Enteiser mit minimierter Korrosivität

Dégivrant écologique avec une corrosivité minimisée

(84) Designated Contracting States:
**AT BE BG CH CY CZ DE DK EE ES FI FR GB GR HU IE IT LI LU MC NL PL PT RO SE SI SK TR**

(30) Priority: **16.05.2003 CZ 20031365**

(43) Date of publication of application:
**23.03.2005 Bulletin 2005/12**

(73) Proprietors:
• **Vysoká skola chemicko-technologická v Praze**
  **16628 Praha 6 (CZ)**
• **Vyzkumny a zkusebni ustav letecky, a.s.**
  **19905 Praha 18 (CZ)**

(72) Inventors:
• **Jiricek, Ivo**
  **16100, Praha 6 (CZ)**
• **Kalivodová, Jana**
  **34815, Planá u Mladé Boleslavi (CZ)**

• **Macák, Jan**
  **26712, Lodenice (CZ)**
• **Cervenka, Jindrich**
  **15000, Praha 5 (CZ)**
• **Pazderová, Martina**
  **27711, Neratovice (CZ)**
• **Maly Pavel**
  **19300, Praha 9 (CZ)**

(74) Representative: **Kratochvil, Vaclav**
**Sachta, Zmeskal & Partners**
**Radlicka 28/663**
**150 00 Praha 5 (Smichov) (CZ)**

(56) References cited:
**EP-A- 0 375 214        US-A- 4 803 007**
**US-A- 5 238 592        US-A- 6 059 989**
**US-A- 6 149 833**

EP 1 516 899 B1

## Description

## Technical field

The invention deals with an effective deicer (defrosting agent) with minimized corrosion effect to metal materials, which is also acceptable from the environmentalist point of view. This deicer is intended for defrosting outside surfaces, like roads, runways and other airport areas.

## Background art

Clean roads with ice removed are the main requirement of traffic safety not only on roads, but also airports in winter time. Defrosting efficiency and acceptable corrosive effect on materials used in aeronautical technology used to be the main criteria for selection of deicer in the past. Because of the annual increase of air transport, which is expected to reach 5.8 per cent in 1998-2008, these criteria are not sufficient. The experience shows that the agents known so far may be very corrosive for the other materials used at airports. Especially the airport technical equipment, like sprinkler trucks, illumination and other runway equipment are affected by corrosion.

Environmental influence of a deicer is another additional criterion apart from the above, the defrosting efficiency and corrosive effect on materials. This is also a very important criterion drawing general attention at present. As deicers are applied on large areas in winter, they should be easily degradable not to cause contamination of surface water.

Most of the chemicals used for defrosting now and in the past do not meet all the three requirements, i.e. high defrosting efficiency, no corrosiveness and easy degradation at the same time. We know that the substances with the highest defrosting efficiency are very corrosive. On the other hand, defrosting liquids showing low corrosiveness are toxic, i.e. harmful to the environment, usually through the corrosion inhibitor used.

New and more efficient deicers are still being developed not only thanks to these facts. There are basically two methods of removing snow and ice from road surfaces. The first one is mechanical and the second one is based on chemical treatment of roads. Combination of both the methods is also possible. The task of chemical preparations is to disintegrate and remove the existing hoarfrost and prevent further snow and ice from accumulation. The mechanical method involves raking, sweeping or possible use of jet motors to remove snow, ice or hoarfrost.

The substances commonly used for defrosting and prevention contain ethylene and propylene glycol, urea, sodium acetate and sodium formate, potassium acetate and potassium formate or magnesium calcium acetate. Sand and sodium chloride are other alternatives. Patent file WO 9832811 describes a deicer based on chlorides with low corrosive effect on low-alloyed steel samples. Here we must mention the generally known fact that chloride environment is dangerous from the point of view pitting and crevice corrosion mainly for materials like stainless steel, aluminium and its alloys. So chlorides or sand are not recommended to be used at airports because of probability of mechanical or chemical damage.

The available deicers are usually supplied in liquid form or solid grains. The solid phase agents are usually combined with liquids to adhere better to the surface. The characteristics, advantages and disadvantages of the deicers used so far are mentioned below. Most of the agents used so far are not very convenient for various reasons. The effect on environment is one of these reasons. This generally described effect is monitored by means of BOC value measurement. It is a biological oxygen consumption, which is defined as weight concentration of dissolved oxygen consumed by biochemical oxidation of organic substances in water in given conditions. High ammonia concentration is another indicator of surface water contamination by deicers. Ammonia is not only toxic to water ecosystem, but its degradation also consumes a lot of oxygen. This is why the urea based deicers used e.g. in patent files nos. US 4,698,173 and EP 0824575, whether they apply urea in pure form or its compound with ethylene glycol, described in patent file No. WO 8602089, are not suitable because of their high toxicity. High corrosiveness is another disadvantage of these agents.

Deicers based on sodium acetate and formate are also used. Sodium acetate defrosts more effectively than urea, but its solid form is a disadvantage. Sodium formate, like sodium acetate is also supplied in the form of grains. These agents may be easily removed from the road surface by air circulation before they even perform their defrosting function.

Agents based on magnesium calcium acetate e.g. the one described in patent file US 4,855,071 also used for defrosting airport surfaces are also supplied in solid form. For their slow defrosting effect these are mostly used to defrost some particular sections of motorways or bridges.

Despite of their high BOC value agents based on glycol presented in the US patent file 4,283,297 are still used for defrosting runway as well as taxiway surfaces at numerous airports. These are propylene and ethylene glycol, while research has shown, that particularly first used ethylene glycol is relatively highly toxic to water environment. Liquids based on potassium acetate also belong among deicers. These agents have good prospect from the environmental point of view thanks to their relatively low BOC value. This agent is also able to melt snow and ice quickly and to be efficient in relatively low temperatures. However the potassium acetate based agents so far available have a disadvantage in high corrosive effect particularly on airport technology materials like galvanized sheet, zinc, copper and its alloys and some carbon steels.

A deicing composition (US patent no. 4,803,007) is a solid mixture of sodium chloride and an inhibitor being a mixture of divalent metal ion and alkali metal polyphosphate.

Solid or aqueous solution (US patent no. 6,059,989) of alkali metal acetate and formate and inhibitor based on 2-7% alkali metal silicate and 0,1-1% alkali metal phosphate ensures good deicing properties and corrosion protection especially with regard to magnesium.

Both patents use inorganic phosphates, which are less effective than organic ones. Therefore, higher quantity of inhibitor must be added to combat corrosion. Environmental impact of this is negative. Phosphate leads to algae grow in natural waters.

European patent file No. 0375214 and patent file No. US 5,238,592 try to solve the problems of corrosion effect of the liquid agents based on alkaline metal acetates. The above deicers according to patent file No. 0375214 containing a combination of corrosion inhibitors alkaline metal phosphate / alkaline metal nitrate shows improved inhibition effect compared to known agents, but its content of phosphate is inconvenient. Patent file No. US 5,238,592 also presents a deicer based on alkaline metal acetate, but the nitrate in the inhibition component is substituted by substances of triazole and imidazole group. As triazole and imidazole are hardly degradable and toxic substances, this agent is also inconvenient.

Patent no. 6,149,833 describes a deicer which comprises 30-70% sodium formate, 30-70% sodium chloride, 0.1-3% corrosion inhibitor, used in the form of solid or in 5-25% aqueous solution.

The corrosion inhibitor consists of sodium silicate, potassium phosphate, copolymers and 0.0001 to 0.01 % of a mixture of 1 part aminotris(methylenephosphonic) acids and 5 parts of zinc sulphate.

As a thickener is used polysaccharide.

The nitrogen content in aminotris(methylenephosphonic) acids makes them toxic.

Referring to the above facts the primal aim of this invention is to provide an anti-icing and deicing agent soluble in water, with low freezing temperature, negligible corrosive effect, low price, acceptable for the environment, and applicable by means of present available machinery.

**Disclosure of the invention**

The above mentioned disadvantages are removed by the deicer according to the invention consisting of:

a) acetate and/or formate of alkaline metal, the content of which ranges from 45 to 55 weight per cent;

b) at least one water soluble corrosion inhibitor, which is advantageously chosen from the group of nitrogen-free alkylphosphonic acids, while the carbon number in the alkyl is $C_1$-$C_4$, in combination with zinc ions, the content of which ranges from 0.001 to 0.1 weight per cent;

c) at least one compound from polysaccharide group, the content of which ranges from 0.05 to 0.15 weight per cent;

d) water, the content of which represents the rest to 100% weight per cent.

Component a) of the deicer according to the invention is acetate and/or formate of alkaline metal, where potassium acetate and/or formate is used in an advantageous version. The acetates and/or formates serve here especially to decrease the freezing point and represent the main component of the deicer apart from water.

Component b) includes corrosion inhibitors usually used for liquids in neutral to basic environment. Low alkyl phosphates, ethyl phosphate or dimethyl phosphate, alkaline metal phosphates, and alkylphosphonic acids are suitable corrosion inhibitors, while nitrogen-free alkylphosphonic acids, where the alkyl is $C_1$-$C_4$ in combination with zinc ions, are more advantageous. Nitrogen-free alkylphosphonic acids have advantage in low toxicity.

Component c) is a substance of polysaccharide group serving for viscosity enhancement. Pectin is advantageously used here.

Component d) is water. Desalted water is advantageously used here.

The fact has been discovered, that higher inhibition efficiency may be reached by using combination of alkylphosphonic acid and zinc ions. Zinc salts of simple organic and inorganic acids may be presented as suitable zinc salts. Both the substances, alkylphosphonic acid and zinc salt are used in weight proportion about 1:1.

The pH value of defrosting liquid should be between 9 and 11. If the liquid according to the invention has not this value it may be adjusted by suitable pH regulators. A basic compound is usually added to a liquid. Alkaline metal hydroxides like sodium hydroxide and potassium hydroxide, alkanolamines like mono-, di-, and triethanolamine and alkylamines are suitable basic compounds. Alkaline metal hydroxides are advantageous.

Tests have shown that its corrosive effect on a wide range of materials like e.g. steels, aluminium compounds, but mainly galvanized steel, zinc, copper and its compound is negligible in comparison with the agents being used so far.

## Best mode for carrying out the invention

The invention will be more closely described on particular examples, which are only illustrative and do not restrict the extent of the invention in any way.

Example 1

The deicer according to the invention will be made by blending the following component:

50 weight per cent of potassium acetate
0.01 weight per cent of 1-hydroxyethan-1,1-diphosphonic acid

0.01 weight per cent of zinc acetate

0.1 weight per cent of pectin

0.05 weight per cent of potassium hydroxide

49.83 weight per cent of water

Corrosiveness of the deicer according to the Example 1 was tested according to ASTM F483 standard (ASTM = American Society for Testing and Materials). It is a method evaluating weight decrease caused by corrosive environment. The testing samples were adjusted according to the standard and then immersed to a solution of the deicer 38±3°C warm for 168 hours. The samples were then dried and weighed. Corrosive speed was calculated from the weight differences at the beginning, after 24 hours and at the end of the test according to the following formula:

$$r = ( K . W ) / ( A . T . D ) \qquad\qquad (1)$$

where r is corrosive speed, K is a constant of vale $8,76.10^4$ in mm per year, W is the measured metal decrement in grams, A is the exposed area in square centimetres, T is the exposure time in hours and D is the metal density in grams per square centimetre. With the constant chosen this way the corrosive speed comes out in mm per year.

The test was performed with copper, carbon steel and galvanized steel. The results are summarized in tab. 1.

Example 2

The following components are to be blended in this example according to the invention:

50 weight per cent of potassium formate
0.01 weight per cent of 2-carboxyethylphosphonic acid

0.03 weight per cent of zinc sulphate

0.1 weight per cent of pectin

0.02 weight per cent of potassium hydroxide

49.84 weight per cent of water

The corrosiveness of the deicer according to example 2 was tested the same way as in example 1. The results are summarized tab. 1.

Example 3 (comparative)

The following components are to be blended in this example according to the invention:
50 weight per cent of potassium acetate

0.1 weight per cent of pectin

0.05 weight per cent of potassium hydroxide

49.85 weight per cent of water

The corrosiveness of the deicer according to example 3 was tested the same way as in example 1. The results are summarized tab. 1.

Tab. 1 Corrosive speed (in mm per year) in the environments of the examples of the deicer according to the invention

| | 1 | 2 | | 3 |
|---|---|---|---|---|
| Copper | 0.004 | 0.006 | | 0.150 |
| Carbon steel | 0.009 | 0.006 | | 0.120 |
| Galvanized steel | 0.020 | 0.008 | | 0.323 |

## Industrial applicability

As this agent is liquid it can be easily applied in relation to the climatic conditions by means of available sprinkling technology.

The agent according to this invention may be advantageously applied at airports for efficient removal of snow, ice and hoarfrost from runways, and for prevention of further piling of snow ice and hoarfrost.

## Claims

1.   Environmentally friendly deicer with minimized corrosiveness consisting of acetate and/or formate of alkaline metal and of at least one corrosion inhibitor, which is chosen from the group of alkylphosphonic acids, while the carbon number in the alkyl is $C_1$-$C_4$, in combination with zinc ions, **characterized by** the fact that it consists of :

     a) acetate and/or formate of alkaline metal, the content of which ranges from 45 to 55 weight per cent;
     b) at least one water soluble corrosion inhibitor, which is chosen from the group of nitrogen-free alkylphosphonic acids, while the carbon number in the alkyl is $C_1$-$C_4$, in combination with zinc ions, the content of which ranges from 0.001 to 0.1 weight per cent;
     c) at least one compound from polysaccharide group used to increase the liquid viscosity, the content of which ranges from 0.05 to 0.15 weight per cent;
     d) water, the content of which represents the rest to 100% weight per cent while the weight percentage is related to the weight of the agent and the pH value of the deicer ranges from 9 to 11.

2.   The agent according to Claim 1 **characterized by** the fact that it includes the components a) through d) with the following quantities :

     a) 45 to 55 weight per cent,
     b) 0.005 to 0.01 weight per cent,
     c) 0.08 to 0.12 weight per cent,
     d) water as the rest to 100 weight per cent

## Patentansprüche

1.   Ein Auftaumittel mit minimalisierter Angriffslust, das für die Umwelt akzeptabel ist, enthält ein Essigester und/oder Formiat eines alkalischen Metalls und mindestens einen Korrosionsinhibitor aus der Gruppe der Alky-Phosphon-Säuren, wo die Kohlenstoffanzahl im Alkyl in Kombination mit Zink-Ionen $C_1$-$C_4$ ist. Das Auftaumittel nach dieser Erfindung besteht aus:

     a) Essigester und/oder Formiat eines alkalischen Metalls, dessen Vertretung sich im Bereich 45 - 55 % Gewicht bewegt;
     b) mindestens einem im Wasser löslichen Korrosionsinhibitor aus der Gruppe der stickstofffreien Alky-Phosphon-Säuren, wo die Kohlenstoffanzahl im Alkyl in Kombination mit Zink-Ionen $C_1$-$C_4$ ist und dessen Vertretung sich im Bereich von 0,001 % bis 0,1 % Gewicht bewegt;
     c) mindestens einer Verbindung aus der Polysacharidgruppe zur Erhöhung der Flüssigkeitsviskosität, derer Vertretung sich im Bereich von 0,05% bis 0,15 % Gewicht bewegt;
     d) Wasser, dessen Vertretung den Rest bis zu 100% Gewicht darstellt, wobei die Prozentwerte zum Gewicht des Mittels bezogen werden und der pH-Wert des Auftaumittels sich im Bereich von 9 bis 11 bewegt.

2.   Das Mittel gemäß Anspruch 1, das sich **dadurch kennzeichnet, dass** es Komponenten a) bis d) in folgenden Mengen enthält:

     a) 45 bis 55 % Gew.
     b) 0,005 bis 0,01 % Gew.
     c) 0,08 bis 0,12 % Gew.
     d) Wasser als Rest bis zu 100% Gew.

**Revendications**

1.  Solution de dégivrage avec corrosivité minimalisée pouvant être acceptée pour l'environnement contenant de l'acétate et/ou du formiate de métal alcalin et au minimum un inhibiteur de corrosion sélectionné dans le groupe d'acide alkylphosphonique, où le nombre de carbone dans l'alcoyle est $C_1$-$C_4$ en liaison avec les ions zinciques. La solution de dégivrage selon cette découverte se compose comme suit :

    a) acétate et/ou formiate de métal alcalin, dont la proportion se situe entre 45-55% de la masse.
    b) au minimum un inhibiteur de corrosion se diluant dans l'eau et l'alkylphosphonique, sans azote, du groupe des acides, où le nombre de carbone dans l'alkyl est $C_1$-$C_4$ en liaison avec les ions zinciques, dont la proportion se situe entre 0,001% à 0,1 % de la masse.
    c) au minimum un corps composé du groupe des polysaccharides pour augmenter la viscosité du liquide, sa proportion se situe entre 0,05% à 0,15% de la masse.
    d) eau dont la proportion représente le reste des 100% de la masse, compte tenu que le pourcentage est pris sur la masse de la solution et pour la solution de dégivrage la valeur pH se situe entre 9 et 11.

2.  La solution selon l'exigence 1 s'exprime par le fait qu'elle contient des éléments allant de a) à d) dans les quantités indiquées :

    a) 45 à 55 % de la masse
    b) 0,005 à 0,01 % de la masse
    c) 0,08 à 0,12 % de la masse
    d) eau en tant que reste pour atteindre les 100% de la masse.